# EUROPEAN PATENT SPECIFICATION

(11) **EP 4 064 047 B1**
(45) Date of publication and mention of the grant of the patent: **14.10.2026**
(21) Application number: 21382243.0
(22) Date of filing: 24.03.2021
(51) Int. Cl.: G06F 9/50, G06N 5/04

(54) **METHOD, SYSTEM AND COMPUTER PROGRAM PRODUCT FOR OPTIMIZING THE DEPLOYMENT OF ANALYTICAL PIPELINES**
VERFAHREN, SYSTEM UND COMPUTERPROGRAMMPRODUKT ZUR OPTIMIERUNG DES EINSATZES VON ANALYTISCHEN PIPELINES
PROCÉDÉ, SYSTÈME ET PRODUIT PROGRAMME INFORMATIQUE POUR OPTIMISER LE DÉPLOIEMENT DE PIPELINES ANALYTIQUES

(43) Date of publication of application: 28.09.2022
(73) Proprietor: Fundación Tecnalia Research & Innovation, 20009 Donostia - San Sebastián (ES); Universidad De La Iglesia De Deusto, 48007 Bilbao (ES)
(72) Inventor: Torre Bastida, Ana Isabel, 20009 San Sebastián (ES); Diaz de Arcaya Serrano, Josu, 20009 San Sebastián (ES); Miñon Jiménez, Raúl, 20009 San Sebastián (ES); Almeida, Aitor, 48007 Bilbao (ES)
(74) Representative: Balder IP Law, S.L.

(56) References cited:
- SUN YAN ET AL: "Multi-objective Optimization of Resource Scheduling in Fog Computing Using an Improved NSGA-II", WIRELESS PERSONAL COMMUNICATIONS., vol. 102, no. 2, 3 January 2018 (2018-01-03), NL, pages 1369 - 1385, XP055831881, ISSN: 0929-6212, DOI: 10.1007/s11277-017-5200-5
- WIKIPEDIA COMMUNITY: "Multi-objective optimization", WIKIPEDIA, 25 January 2021 (2021-01-25), pages 1 - 21, XP055831864, Retrieved from the Internet <URL:https://web.archive.org/web/20210125171213/https://en.wikipedia.org/wiki/Multi-objective_optimization> [retrieved on 20210812]
- HOSSEINZADEH MEHDI ET AL: "Multi-Objective Task and Workflow Scheduling Approaches in Cloud Computing: a Comprehensive Review", JOURNAL OF GRID COMPUTING, SPRINGER NETHERLANDS, DORDRECHT, vol. 18, no. 3, 1 September 2020 (2020-09-01), pages 327 - 356, XP037256461, ISSN: 1570-7873, [retrieved on 20200917], DOI: 10.1007/S10723-020-09533-Z
- BELLENDORF JULIAN ET AL: "Classification of optimization problems in fog computing", FUTURE GENERATION COMPUTER SYSTEMS, ELSEVIER SCIENCE PUBLISHERS. AMSTERDAM, NL, vol. 107, 25 January 2020 (2020-01-25), pages 158 - 176, XP086097290, ISSN: 0167-739X, [retrieved on 20200125], DOI: 10.1016/J.FUTURE.2020.01.036
- QIANG YANG ET AL: "Federated Machine Learning: Concept and Applications", ACM TRANSACTIONS ON INTELLIGENT SYSTEMS AND TECHNOLOGY, ASSOCIATION FOR COMPUTING MACHINERY CORPORATION, 2 PENN PLAZA, SUITE 701 NEW YORK NY 10121-0701 USA, vol. 10, no. 2, 28 January 2019 (2019-01-28), pages 1 - 19, XP058427733, ISSN: 2157-6904, DOI: 10.1145/3298981
- MARÍA AROSTEGI ET AL: "A heuristic approach to the multicriteria design of IaaS cloud infrastructures for Big Data applications", EXPERT SYSTEMS, LEARNED INFORMATION LTD. ABINGDON, GB, vol. 35, no. 5, 12 January 2018 (2018-01-12), pages n/a, XP071528866, ISSN: 0266-4720, DOI: 10.1111/EXSY.12259

## Description

### TECHNICAL FIELD

The present invention relates to the field of analysis and processing of large amounts of data. In particular, it relates to methods and systems involving multilayer distributed infrastructures, for deployment on production of analytical pipelines, especially on industrial domains.

### STATE OF THE ART

Big Data technologies help to manage with the problems derived from having enormous volumes of information, real-time data intensive applications and heterogeneous systems where there exist a huge variety of data. Architectures capable of dealing with this must be highly scalable, resilient and secure. Hence, emerging computing paradigms like Cloud Computing must be considered. However, there are applications that require low latency, and the inherent delay of transferring data back and forth to the Cloud seriously impacts performance. In order to overcome this limitation, the Fog Computing paradigm has been proposed (see for example Cisco Fog Computing Solutions, 2015. Unleash the power of the Internet of Things. Cisco Systems Inc (2015)), in which cloud services are extended to the edge of the network to decrease the latency and network congestion. From these two paradigms, three layers of computing can be identified: cloud, fog and edge.

Regarding the Cloud layer (see for example Armbrust M. et al., 2010, A View of Cloud Computing, Commun. ACM 53, 4 (April 2010), 50-58), Cloud Computing refers to applications delivered as services over the Internet, as well as to the hardware and software in data centres that provide those services. Regarding the Fog Layer (see for example Martin J.P. et al., 2019. Elucidating the challenges for the praxis of fog computing; An aspect-based study. International Journal of Communications Systems (02 2019)), it offers some of the cloud services closer to where the data is generated. This helps lowering the latency and reduces the burden on the network. In general, Fog computing is considered to be a virtualized platform with computation, storage and networking capabilities, which integrates both traditional cloud servers and edge devices extending the cloud computing paradigm. Yan Sun et al. disclose in "multi-objective Optimization or Resource Scheduling in Fog Computing Using an Improved NSGA-II, Wireless Pers Commun (2018) 102:1369-1385, a two-level resource scheduling model including two parts: resource scheduling among various fog clusters and resource scheduling among fog nodes in the same fog cluster. Finally, at the Edge Layer (see for example Shi W. et al., 2016, Edge Computing: Vision and Challenges, IEEE Internet of Things Journal 3, 5 (Oct 2016), 637-646) data are gathered by devices acting as hubs, which can transform the data and send them to the upper layers. The Edge layer offers extremely low latencies, making it appropriate for architectures where drawbacks need to be addressed immediately. An architecture that consolidates cloud, fog and edge computing is disclosed by Diaz-de-Arcaya J. et al. in Towards an Architecture for Big Data Analytics Leveraging Edge/Fog Paradigms, ECSA, September 9-13, 2019, Paris, France.

Architectures of systems for data processing must make use of these three computing layers in an optimal way, especially for complex processes such as analytics, composed of heterogeneous phases and components.

When choosing an architecture for the deployment of an analytical pipeline, the challenge lies in efficiently combining the world of data science with that of software engineering. The gap in knowledge between data analysts -dedicated mainly to the analysis of data from a mathematical-statistical perspective to design analytical algorithms, based on Al techniques, that allow inferring information and conclusions of value- and software engineers -coming from the IT world, and focused on implementing efficient systems and processes on the existing computing and storage infrastructure-, is currently very large, which causes problems in the development of systems and products oriented to data analytics and based on artificial intelligence techniques, such as Machine Learning or Deep Learning. In terms of making these systems and products that implement analytical pipelines productive, performance problems may arise related to the inadequate selection of technologies or infrastructures, in which to deploy them. This problem is enlarged by the lack of tools that allow automating the deployment process from the perspective of improving and making a correct use of the available infrastructure without harming the performance and the requirements of the analytical process itself.

Another important consideration is that currently the technological infrastructure on which analytical programs are deployed is constantly evolving, introducing new computing and storage options and layers. Distribution is a reality, enabling the possibility of configuring different deployment topologies based on different physical locations of the infrastructure with respect to the origin of the data. And it is in this context, where the Edge Computing paradigm makes sense, because it tries to bring processing closer to the nodes where the data is originated, also taking advantage of the hardware resources that these devices provide -which were previously wasted. The combination of this computing paradigm with Al techniques and analytical processing implies great advantages, such as better response latencies by eliminating penalties for data transport, less security risks as there are fewer points of failure or, as already discussed, a greater amount of computing resources. However, there are still major challenges to address since using edge nodes as computing resources entails a series of considerations such as their availability, their performance, and the synchronization and orchestration of the processes between the different nodes and, if necessary, with other central cloud nodes or data repositories.

In this context, there exist several deployment frameworks and tools for managing large amounts of data. For example, MLow (Zaharia, M. et al.: Accelerating the machine learning lifecycle with MLflow. IEEE Data Eng. Bull. 41(4), 39-45 (2018)) provides tools for packaging and deploying analytical pipelines in different environments. ML.NET (Lee, Y. et al.: From the edge to the cloud: Model serving in ML.NET, IEEE Eng. Bull. 41(4), 46-53 (2018)) is another open source framework proposed by Microsoft to deploy machine learning pipelines. For typical operational workflow operationalization, on the other hand, Verma et al. (Large-scale cluster management at Google with Borg. In: Proceedings of the Tenth Euro-pean Conference on Computer Systems. pp. 1-17 (2015)) proposed a cluster manager to execute hundreds of workloads across thousands of machines. This project was the cornerstone for Kubernetes (https://kubernetes.io). Another effort towards the orchestration of workloads in distributed environments is Docker Swarm (https://docs.docker.com/engine/swarm), which offers less features than Kubernetes, but at a lower technological footprint. However, both Kubernetes and Docker Swarm are general-purpose deployment frameworks, and do not specifically focus neither on Machine Learning (ML) nor on Artificial Intelligence (Al).

Table 1 offers a comparison of the aforementioned technologies in conjunction with some trends found in academia. All of them are evaluated against the criteria explained below:
1. Deployment awareness, allowing for the definition of the restrictions an analytical pipeline needs to adhere when deployed in production.
2. Domain orientation, providing annotations specific for the analytical domain.
3. Interacts with technologies already existing in the infrastructure (i.e. Apache Spark (see Zaharia, M. et al., Apache spark: a unified engine for big data processing. Communications of the ACM 59(11), 56-65 (2016)), Apache Flink (see Carbone, P. et al., Apache ink: Stream and batch processing in a single engine. Bulletin of the IEEE Computer Society Technical Committee on Data Engineering 36(4) (2015)).
4. Permits the definition of the entire pipeline alongside the annotations in a single text file, so it can be versioned, and integrated into Continuous Integration and Delivery workflows.
5. Has a low technological footprint, facilitating the use of existing infrastructures with heterogeneous devices.
6. Enables the deployment of analytical pipelines in different layers of the architecture (i.e. Edge, Fog, Cloud).

**Table 1: Technologies for deploying analytical pipelines in production environments However, the tools or systems mentioned above are simply approximations destined to the automation of the deployment of the analytical pipelines.**

| | (1) Deployment Awareness | (2) Analytic Oriented | (3) Technology Agnostic | (4) Text Based | (5) Small Technological Footprint | (6) Multilayer Awareness |
|---|---|---|---|---|---|---|
| ML flow | S | f | S | n | f | n |
| ML.NET | S | f | n | n | n | n |
| Kubernetes | f | n | n | f | n | n |
| Docker Swarm | f | n | s | f | s | n |
| Stratum | s | f | s | n | s | n |
| DEEP-Hybrid-DataCloud | s | f | s | n | s | n |
| (f) full support, (n) not supported, (s) to some extent | | | | | | |

In addition to above cited prior art, publication by Qiang Yang et al. "Federated Machine Learning: Concept and Applications", ACM Transactions on Intelligent Systems and Technology, vol. 10, no. 2, January 2019, discloses federated machine learning, in which models are trained using data distributed across different devices or data owners without centralising the local data. This publication addresses data isolation, privacy and security in distributed machine-learning settings, but does not disclose using federated learning to compute edge-device failure probabilities for a resilience fitness function in a cloud/ edge analytical-pipeline deployment optimiser.

Maria Arostegi et al. in "A heuristic approach to the multicriteria design of laaS cloud infrastructures for Big Data applications", Expert Systems, vol. 35, no. 5, 2018, disclose multi-objective design of laaS cloud infrastructures for Big Data platforms. This design balances cost, reliability and computing capacity using evolutionary heuristics. This publication does not disclose a cloud/edge analytical-pipeline deployment optimiser in which edge-device failure probability is obtained by a federated local/global prediction model and used in a resilience fitness estimation function.

Therefore, there is a need to develop a method and system for optimizing the deployment of analytical pipelines which tries to overcome the limitations of conventional tools therefor.

### DESCRIPTION OF THE INVENTION

The method and system for optimizing the deployment of analytical pipelines described in the present invention intend to solve the shortcomings of prior-art methods and systems therefor. The method and system optimize analytical workloads in multilayer infrastructures (e.g. on-premise, cloud, fog, edge) based on several criteria. The proposed method and system take into account the resources (also referred to as computing devices or nodes) at the edge and includes these resources as an actionable computational layer.

In the context of the present invention, the term "on-premise" refers to a type of instantiation for software solutions in proprietary infrastructure of the company. While devices provided by on-premise solutions are usually (in terms of hardware) similar to devices in the cloud, they differ in that in on-premise solutions the infrastructure belongs to the company. Therefore, they are usually closer to the industrial infrastructure. The method and system take into special consideration the implications of leveraging edge as a computing layer.

In the context of the present invention, an analytical data pipeline is a chain of command-line tools and custom scripts, grouped in different data analysis phases. Each data analysis phase comprises a model or process and computational and analytical features for implementing analytic processes. For instance, an analytical pipeline can be used to detect traffic jams and to react accordingly through suitable mobility plans. A set of computing environment recommendations, such as a set of desired/possible infrastructure resources for its computation (such as CPU, RAM, disk and/or others) and/or the computing layer or layers in which it is recommended to be executed (such as cloud, fog and/or edge), can optionally be specified at one or more data analysis phases.

The optimized analytical pipeline as provided by the method of the invention can be deployed in different layers of computation, such as cloud, fog and edge layers. Preferably, the proposed method enables the deployment of the optimized analytical pipeline to be made at least in the cloud layer and in the edge layer. Optionally, the deployment can also be made in the fog layer, for example when the fog layer is described as part of the infrastructure. To achieve this, the following must in turn be achieved: a) the implementation of an algorithm that effectively and adequately models the domain and multi-objective problem; and b) the definition and computation of adequate fitness metrics that reflect the criteria to be considered. Therefore, a definition of the objective metrics or functions to be optimized is required. These objective metrics or functions to be optimized are preferably: the infrastructure cost, the runtime performance and the resilience of the deployment, including its fault tolerance and availability.

Regarding the (a) implementation of an algorithm that effectively and adequately models the domain and multi-objective problem, in embodiments of the invention, an algorithm based on the NSGA-II algorithm is used, in which the NSGA-II is adapted by virtue of its selection strategy, based on non-dominance ranking and crowding distance. NSGA-II is preferably selected because it provides a simple search mechanism with good convergence and diversity properties.

Regarding the (b) definition and computation of adequate fitness metrics that reflect the criteria to be considered, the following three criteria are preferably considered: A first fitness metric f_{c}(x), which is a cost fitness metric, which accounts for the economic cost of the infrastructure considered in the deployment (including for example purchase, operation and maintenance and energy consumption). For example, the overall cost of the deployment f_{C}(x) may result from the aggregation of all expenses related to the deployment of the pipeline, due not only to the acquisition of the Cloud infrastructure and software licenses (dictated by prevailing pricing schemes different providers), but also to the cost of supplying energy to all the elements of the infrastructure; A second fitness metric f_{R}(x), which is a resilience fitness metric, which stands for the resilience of the deployment, computed numerically as the probability of failure of infrastructure elements; And a third fitness metric f_{P}(x), which is a performance fitness metric, which quantifies the processing performance of the analytical pipelines taking into account the net computing, storage and communications capacity of the infrastructure. Therefore, the multi-objective is to provide a solution which minimizes the cost fitness metric while maximizes the reliability fitness metric and the performance fitness metric. Optimization of the infrastructure cost implies cost minimization. Optimization of the runtime performance implies performance maximization. Optimization of the resilience of the deployment implies increased resilience, fault tolerance and availability of the deployment. In order to optimize the deployment of an analytical pipeline, the following inputs are required: a detailed description of the analytical pipeline/workload, and a definition of the currently existing infrastructure that can be considered in the deployment.

The method also predicts the availability of the computing devices or nodes comprised in the edge layer (also referred to as edge devices or edge nodes). In the context of the present invention, "edge devices" or "edge nodes" are computing elements existing in the edge layer. An edge device can be seen as any piece of hardware that brings computation and data storage capabilities closer to the location where it is needed/consumed. The edge layer can comprise different computing elements. Non-limiting examples of elements that can be comprised in the edge layer are: peripheral devices, such as single board computers or microcontroller boards; and smart devices, such as phablets, tablets, devices with Android operating system or other smart devices, such as Google Coral (https://coral.ai/), Arduino Uno (https://arduino.cl/arduino-uno/) and Raspberry-Pi-3 (https://www.raspberrypi.org/products/ raspberry-pi-3-model-b/). Edge computing elements have certain processing capabilities, usually based on architectures different from CPUs, such as single board computers or microcontroller boards, among others.

Availability of computing nodes in the edge layer is done by means of a system for failure prediction that allows predicting the availability of the edge devices preferably using a Federated Machine Learning prediction algorithm. The predictions feed the objective function that allows to maximize the resilience of the deployment on the infrastructure, selecting those deployment configurations that favor a high availability of computing resources. In the context of the present invention, the term federated refers to the aggregation of several local models into a single central model (also referred to as global model). The local models are processed in respective devices or nodes, that can be seen as distributed devices or nodes because the processing of a global model is distributed into different devices or nodes. One or more edge devices or nodes is assigned local training in order to build a local model. The different local models created or trained at different edge devices or nodes are aggregated or federated in a master node or server, forming a global model in charge of prediction the probability of failure of edge devices or nodes.

Thus, the method and system are able to choose the best deployment configuration. As a result, an output file defining an optimized execution environment for the analytical pipeline under study can be provided.

A first aspect of the invention relates to a computer-implemented method for optimizing the deployment of an analytical pipeline in an industrial production environment, as specified in the claims.

In embodiments of the invention, the set of variables x = [x_{f1}, x_{f2}, .., x_{fM}] comprises the following variables: a variable defining whether on-premise or cloud servers are used; a variable defining a selected infrastructure layer; a variable defining a technology to implement the algorithm; and at least one of the following variables: a variable defining an estimated Random-access memory required, a variable defining an estimated number of available CPU or cores required, and a variable defining an estimated storage capacity required.

In embodiments of the invention, the set of variables x = [x_{f1}, x_{f2}, .., x_{fM}] further comprises at least one of the following variables: a variable defining a infrastructure fault tolerance level configured; a variable defining a security level provided by the infrastructure; and a variable defining a probability of failure of at least cloud and edge layer devices.

In embodiments of the invention, the definition of an available infrastructure for the deployment of the analytical pipeline also comprises a plurality of computing devices located in a fog layer.

In embodiments of the invention, the resilience fitness estimation function uses statistics to estimate the resilience of elements belonging to the cloud layer and a predictive model for estimating the resilience of the devices belonging to the edge layer.

In embodiments of the invention, the estimation of the resilience of the devices belonging to the edge layer is done in a federated way.

In embodiments of the invention, the estimation of the resilience of the devices belonging to the edge layer is done as follows: at the optimization module, making a request for a prediction of failure of at least one edge device comprised in a possible deployment solution of the analytical pipeline; at the at least one edge device, building a local failure prediction model using statistics of the edge device; sending the local failure prediction model built in the at least one edge device to a master device; at the master device, aggregating the at least one local model received from the at least one edge device in a global model; calculating a prediction of failure of the at least one edge device by executing said global model.

In embodiments of the invention, the optimization module makes one request of prediction of failure per each edge device comprised in a possible deployment solution, and: the master device calculates a prediction of failure of each edge device by executing said global model, the master device sends the optimization module each prediction of failure, and the optimization module calculates a failure prediction of the edge layer from the individual edge device failure predictions.

In embodiments of the invention, the optimization module makes a request of prediction of failure for the edge layer, and: the master device calculates a prediction of failure of each edge device by executing said global model, the master device calculates a failure prediction of the edge layer from the individual edge device failure predictions, and the master device sends the optimization module the failure prediction of the edge layer.

In embodiments of the invention, the multi-objective heuristic algorithm is the NSGA-II algorithm.

A second aspect of the invention relates to a computing device implementing an optimization module for optimizing the deployment of an analytical pipeline, as specified in the claims.

A third aspect of the invention relates to a system, as specified in the claims.

In embodiments of the invention, the at least one edge device is configured to build a local failure prediction model using statistics of the edge device and to send it to the master device, the master device being configured to aggregate the at least one local model received from the at least one edge device in the global failure prediction model.

A fourth aspect of the invention relates to a computer program product comprising computer program instructions/code for performing the method of the first aspect of the invention.

A fifth aspect of the invention relates to a computer-readable memory/medium that stores program instructions/code for performing the method of the first aspect of the invention. Additional advantages and features of the invention will become apparent from the detail description that follows and will be particularly pointed out in the appended claims.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 illustrates a schematic diagram of the system for optimally deploying analytical pipelines in complex environments according to embodiments of the present invention.
Figure 2 schematically shows an example of a problem to be solved by the method of the invention.
Figure 3 shows an architecture of the system for selecting a best deployment configuration for analytical pipelines according to embodiments of the present invention.
Figure 4 shows a data flow of the stages performed at the edge node failure prediction subsystem, according to embodiments of the invention.
Figure 5 shows a possible implementation of the edge device failure prediction subsystem, in which a global model for the edge layer is generated, according to an embodiment of the invention.
Figure 6 shows an example of predictive maintenance use case performed by the method of the invention.

### DESCRIPTION OF A WAY OF CARRYING OUT THE INVENTION

A method and system for optimizing, following multiple criteria (cost, performance and resilience) the deployment of analytical pipelines in complex production environments, is disclosed next.

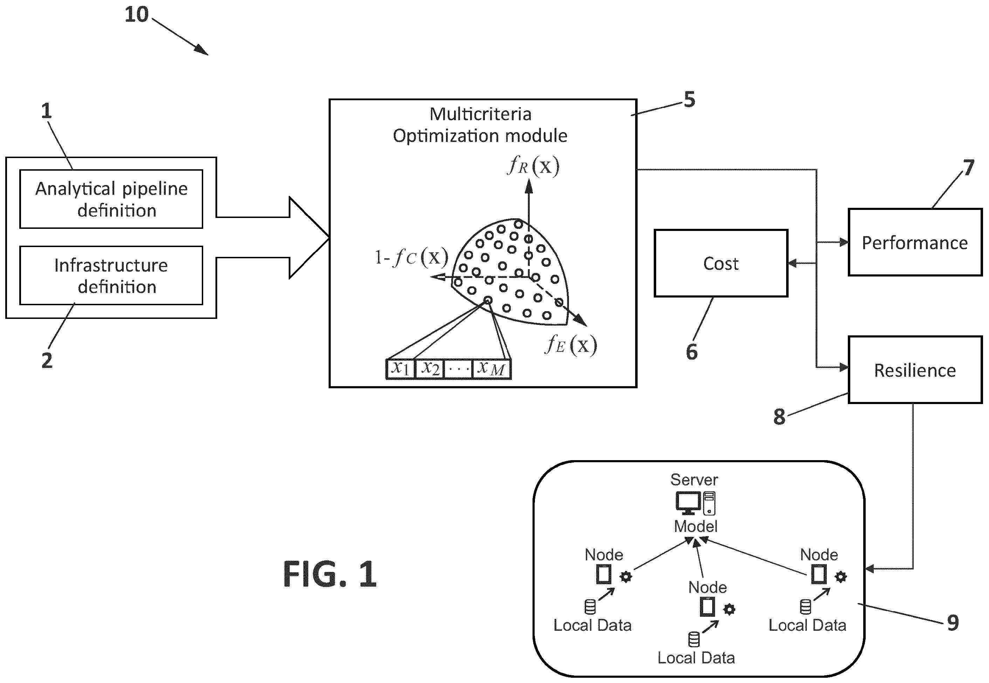

Figure 1 shows a conceptual scheme of the proposed method (e.g. decision-making method) and system 10 to solve the optimization of deployment of analytical pipelines in multiple computational layers. In particular, the proposed method solves the optimization of deployment of analytical pipelines in at least two computational layers, namely the cloud layer and the edge layer. There may also be on-premise computing infrastructure. Optionally, the fog layer may also be comprised in the multiple computational layers in which the deployment is optimized, for example depending on the specifications of the use scenario. Each layer will be composed of a set of heterogeneous computing elements, such as servers (for example dedicated servers) and devices (for example smart devices). The cloud and optional fog layers are not shown in the figure. The edge layer is schematically represented in subsystem 9 which comprises a plurality of edge devices or nodes.

The system 10 uses as inputs a description or definition of the analytical pipeline 1 to be deployed and a description or definition of the available infrastructure 2 (computational layers and elements available within each layer).

The description of the analytical data pipeline 1 to be deployed comprises one or more data analysis phases, each of which comprises a model and computational and analytical features for implementing one or more analytic processes. An analytical pipeline is understood as a sequence of steps, called phases, in which data is manipulated, designed to satisfy a specific objective. Non-limiting examples of objectives to be met in a phase, are: applying data transformation in order to prepare data for further processing; applying a mathematical formulae; and training or executing an IA model in order to obtain data with significant information. Each phase has features that define the phase computationally and analytically. The model is understood as the program / operation to be executed in each phase for the analysis to be performed. Each phase has input data, which is data collected from different sources that allow inferring new analytical knowledge. In a non-limiting example, input data to the analytical pipeline can be datasets that represent variables of machines of an industrial plant. Output data is the result of the program or operation executed on the input data. In a non-limiting example, output data can be a prediction of components wear in an industrial machine. Optionally, a set of computing environment recommendations can also be specified at one or more data analysis phases. Non-limiting examples of computing environment recommendations may be: a list of preferred infrastructure resources capabilities for its computation (such as CPU, RAM and hard disk size) and one or more computing layers in which it is in principle recommended that the analytical pipeline be executed (such as cloud, fog and/or edge).

The description of the available infrastructure 2 includes the available computational layers and a definition or enumeration of computing elements or resources available within each layer. Computing elements are defined as hardware units capable of computing processes and storing data. Preferably, at least the two following computational layers are part of the infrastructure 2: the cloud layer and the edge layer. In embodiments of the invention, in addition to the cloud layer and the edge layer, the fog layer may also be included. Therefore, the elements available at the cloud layer, at the edge layer (and optionally, at the fog layer if there is fog layer) are defined at the infrastructure definition 2.

The computational layers (such as cloud layer, edge layer and fog layer) can comprise different computing elements. The existence and consideration of one or another layer will depend on the available infrastructure. Computing elements may be central units or peripheral units. These elements are usually characterized by their hardware properties regarding computing. Non-limiting examples of properties characterizing the computing elements are: CPUs (for example, the number of CPUs), GPUs (for example, the number of GPUs), memory (for example, the type and amount of memory), and hard disk (for example, the type and amount of hard disk). Non-limiting examples of elements that can be comprised in the cloud layer are: servers, such as computer hardware servers or virtual servers, and clusters, such as GPU clusters, CPU clusters or big data clusters. The cloud layer is not illustrated. The edge layer can also comprise different computing elements. Non-limiting examples of elements that can be comprised in the edge layer are: peripheral devices, such as single board computers or microcontroller boards; and smart devices, such as devices with Android operating system, phablets or tablets. The edge layer is schematically represented in subsystem 9. The fog layer, when there is one, can also comprise different computing elements. A representative example of elements that can be comprised in the fog layer are loT gateways, which serve as connection point between the cloud layer and the edge layer or between the cloud layer and local elements, such as controllers, sensors and intelligent devices. A loT gateway is typically a hardware device comprising a server (for example a dedicated server). The fog layer is not illustrated.

The inputs (analytical pipeline to be deployed 1 and available infrastructure 2) to system 10 are provided to an optimization module 5 which, based on three objectives (cost, resilience and performance), chooses the best possible deployment option. Module 5 implements an algorithm that effectively and adequately models the multi-objective problem. This means that the algorithm optimizes the solution to a defined problem based on three objectives, which are measured or evaluated using three respective fitness metrics. The cost objective 6 may take into account, for example, market, maintenance, personnel and energy consumption. The performance objective 7 may take into account, for example, spatistic runtime and makespan. The resilience objective 8 may take into account, for example, security risks and reliability statistics. A subsystem 9 for the failure prediction of the devices of the edge layer is preferably used associated to the resilience objective. This failure prediction is preferably based on a federated machine learning scheme. Module 5 is preferably deployed or implemented in a computing device, such as in a server (for example, in a dedicated server). Therefore, in the present disclosure module 5 is also referred to as computing device 5.

Module 5 behaves as follows: Given the definition of pipeline 1 and infrastructure 2, in a first step, the algorithm randomly initializes a set of deployment solutions. Each deployment solution is defined by a set of variables that can take different values. Next, in a second step, the algorithm calculates the values of the objective functions for said deployment solutions. This way, the algorithm can assess how optimal these solutions are. In order to perform the second step, the input information provided about the analytical pipeline and infrastructure is needed. Then, in a third step, the algorithm selects (ranks) those deployment solutions that are closer to a desired optimal solution (in other words, solutions optimizing the values of the three objective functions) and, based on them, it generates new solutions that will again be evaluated by the objective functions. Therefore, in this way, the algorithm executes an iterative process of: 1) objective functions computation, 2) selection of deployment solutions based on the three objective functions values and 3) generation of new solutions from the selected ones, until a sufficiently optimal solution is provided or a limit of iterations is reached. A proposed solution for the deployment of the analytical pipeline usually indicates, for each phase of the pipeline, which computing devices (which may be for example computing devices located at the cloud layer, at the edge layer, and optionally at the fog layer) are proposed to be deployed.

In embodiments of the invention, the algorithm implemented at module 5 is based on the NSGA-II algorithm, which is adapted by virtue of its selection strategy, based on non-dominance ranking and crowding distance. NSGA-II is preferably selected because it provides simple search mechanisms with good convergence and diversity properties.

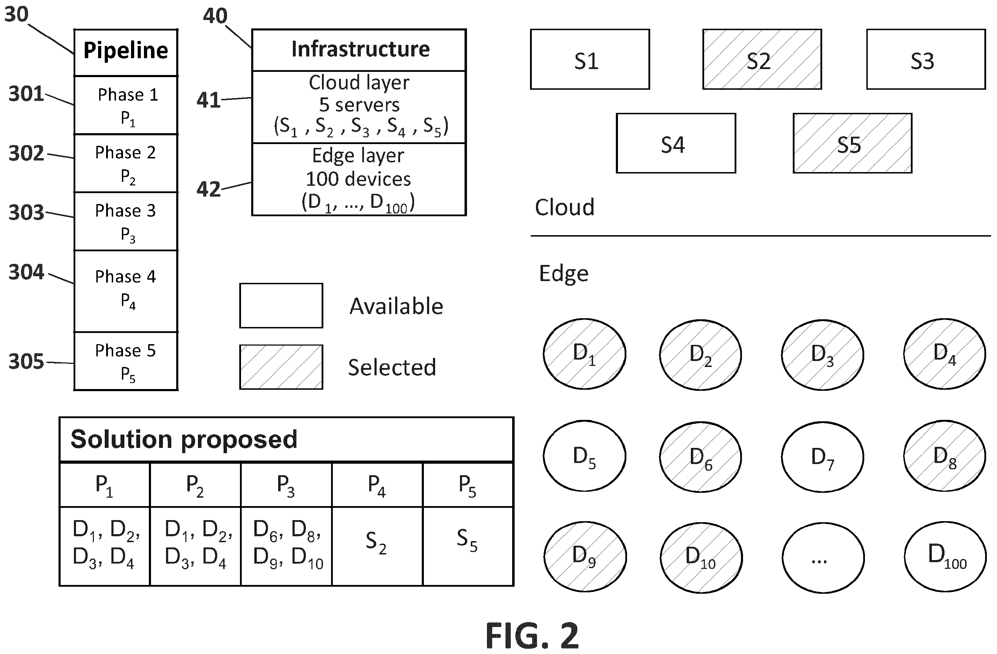

Figure 2 schematically shows a simplified example of a problem to be solved by the method of the invention, and a possible solution (output data) thereto. Initially, an analytical pipeline **30 -whose** deployment will be optimized by the method of the invention- has been defined or provided. The analytical pipeline has different phases of analytical processing. In the example, it has 5 phases P₁-P₅ 301-305. An available infrastructure 40 is also depicted. In the present example, the available infrastructure 40 is grouped into two layers: a cloud layer 41 and an edge layer 42. In the example, the cloud layer 41 has 5 elements S₁-S₅ (5 servers or server nodes); and the edge layer 42 has 100 elements D₁-D₁₀₀ (100 edge devices or computing elements). Under this scenario, it is necessary to search an optimal solution that matches each phase P₁-P₅ 301-305 of analytical processing with elements of the infrastructure 40. In the schematic diagram of Figure 2 the calculation and use of fitness metrics (cost, resilience and performance fitness metrics) have not been illustrated. A possible final solution is shown, in which the first three phases P₁-P₃ are proposed to be deployed in edge devices (phase P₁ in devices D₁-D₄; phase P₂ in devices D₁-D₄; and phase P₃ in devices D₆, D₈-D₁₀;) and the final phases (P₄-P₅) are proposed to be deployed in cloud servers (S₂, S₅, respectively).

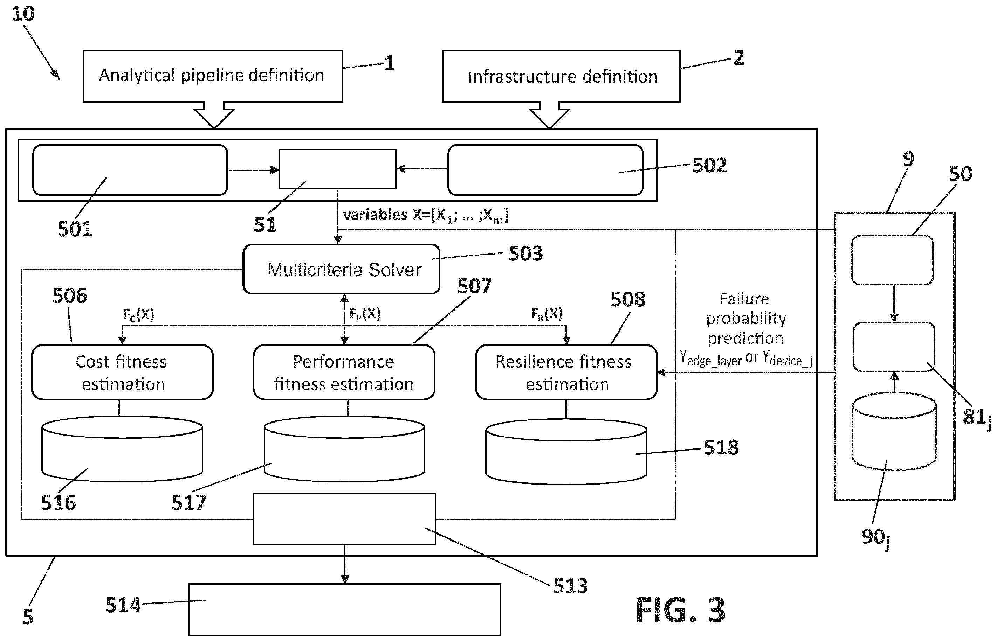

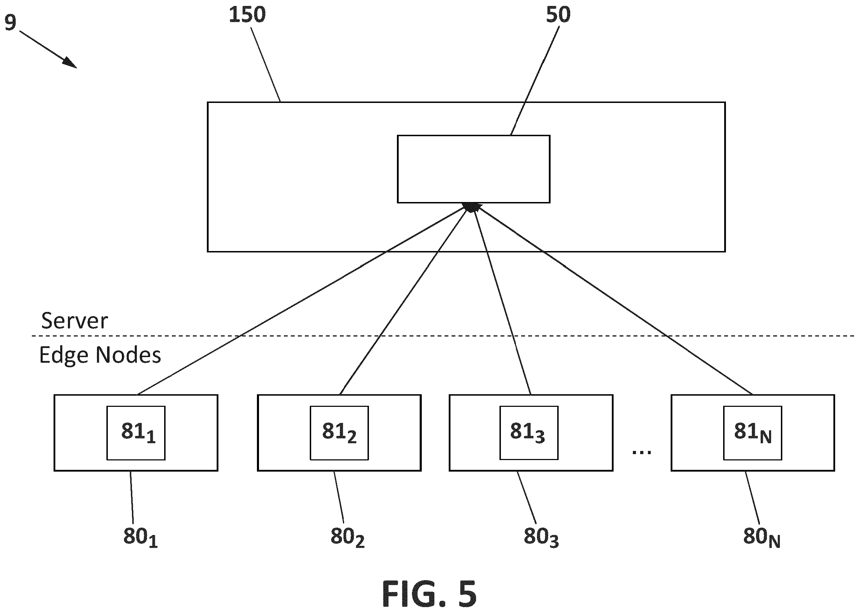

Figure 3 represents a more detailed architecture of the method and system 10 of the invention, and in particular of the optimization module 5 -implemented in a computing device or server- and the failure prediction subsystem 9. The failure prediction subsystem 9 is illustrated in more detail in Figure 5. Module 5 is preferably implemented in a central server of the system 10. Module 5 may comprise different modules or submodules, usually software modules embedded in a same computing device (such as a server). The different software modules may run on a same or on different processing units of a same computing device. Module 5 comprises different submodules, such as an analytical features parser 501 (also referred to as analytical features parser) and an infrastructure information parser 502 (also referred to as infrastructure features parser). Analytical information parser 501 extracts, from the pipeline definition input 1, necessary information for first initializing a set of deployment solutions and later computing the objectives functions formulas required to perform their optimization. In a non-limiting example, extracted information from the pipeline definition 1 may comprise at least one of: number of phases of the pipeline, type of algorithms involved and processing time specifications. Other information may also be comprised in the extracted information. Infrastructure information parser 502 extracts, from the available infrastructure definition input 2, necessary information for first initializing the set of deployment solutions and later computing the objectives functions formulas required to perform their optimization. In a non-limiting example, extracted information from the available infrastructure definition 2 may comprise at least one of: number of servers in the cloud layer, number of devices in the edge layer and computing capabilities (processor speed memory and hard drive capacity, for example) of each edge device. Other information may also be comprised in the extracted information. A deployment solution variables initiator 51 collects information parsed by the analytical information parser 501 and information parsed by the infrastructure information parser 502, and converts it into an array of variables that describes a possible deployment solution, X.

In embodiments of the invention, at least some of the following variables are used to describe a possible deployment solution X (in parenthesis, exemplary values that these variables may take, as defined in module 5).
X_{f1}: On-premise(0) or Cloud provider selected (Amazon(1), Google(2), Microsoft(3))
X _{f2}: Infrastructure layer selected: Cloud(0), Fog(1), Edge(2)
X _{f3}: IA library or technology selected to implement the algorithm features, for example: L1 (Parallelized(0) or non-parallelized(1)) and L2 (CPU based(0) or GPU based(1))
X _{f4}: Random-access memory (RAM) estimated necessary (0 - 2048)
X _{f5}: Number of available CPU (cores) estimated necessary (0- 512)
X _{f6}: Storage capacity (in GB) estimated necessary (0-1000)
X _{f7}: Infrastructure fault tolerance level configured (1-10)

Preferably, at least the following variables are used: X_{f1} (On-premise or Cloud provider selected); X_{f2} (Infrastructure layer selected); X_{f3} (IA library or technology selected to implement the algorithm features); and at least one of X_{f4} (Random-access memory (RAM) estimated necessary), X_{f5} (Number of available CPU (cores) estimated necessary) and X_{f6} (Storage capacity (in GB) estimated necessary). More preferably, X_{f7} (Infrastructure fault tolerance level configured) is also used. Still more preferably, all the seven former variables are used.

In embodiments of the invention, one or both of the following variables may optionally also be used (in parenthesis, exemplary values that these variables may take):
X _{f8}: Security level provided by the infrastructure (1-10)
X_{f9}: Probability of failure of cloud, fog and edge layer elements (0-100)

In embodiments of the invention, the selected variables are present in all the different phases of the pipeline to be deployed.

In other words, the deployment solution to be provided is described by the previously defined X variables, specifying the following aspects for each phase of the analytical pipeline, which preferably are: a) selection of the type of infrastructure: On-premise or Cloud , b) selection of the infrastructure layer: Cloud, Fog, Edge, c) IA library or technology selected to implement the algorithm, d) properties of the resources, such as RAM, CPU, Storage, and optionally e) level of fault tolerance allowed, f) Security level provided by the infrastructure and g) Probability of failure of cloud, fog and edge layer elements.

Three fitness metrics are preferably considered by the optimization module 5, in particular multicriteria solver 503, which are: a) the cost of the infrastructure or cost fitness estimation or metric (block 6 in Figure 1, block 506 in Figure 3), b) the performance of the pipeline in the considered infrastructure or performance fitness estimation or metric (block 7 in Figure 1, block 507 in Figure 3), and c) the resilience of the infrastructure elements or resilience fitness estimation or metric (block 8 in Figure 1, block 508 in Figure 3). The cost fitness metric **f_{c}(x)** accounts for the economic cost of the infrastructure considered in the deployment (including for example purchase, operation and maintenance). The resilience fitness metric **f_{R}(x)** stands for the reliability of the deployment, computed numerically as the probability of failure of infrastructure elements. The performance fitness metric **f_{P}(x)** quantifies the processing performance of the analytical pipelines considering at least the net computing, storage and/or communications capacity of the infrastructure. Therefore, the goal of the algorithm is to find a solution which minimizes the cost fitness metric while maximizes the reliability fitness metric and the performance fitness metric. The mentioned variables **X = [x_{f1}; ... ; x_{fM}]** are preferably implied in the computation of the aforementioned objectives, for each phase (P₁-P₅ in Figure 2), of the analytical pipeline. In the three metrics **f_{C}(x), f_{P}(x)** and **f_{R}(x), x** represents the set of selected variables.

The different fitness estimations performed at modules 506, 507 and 508 have already been explained. These fitness use the selected variables X, and the information defining the analytical pipeline (input 1 parsed at module 501) and the available infrastructure (input 2 parsed at module 502). These fitness estimations measure compliance of the selected variables X in terms of three dimensions: cost, computing performance and system resilience, as already explained.

Thus, from analytical features parser 501 and infrastructure features parser 502, a set of variables x = [x_{f1}, x_{f2}, .., x_{fM}] is collected by the deployment solution variables initiator 51 and provided to a module 503. Module 503 is a multicriteria solver, which implements the optimization scheme in order to obtain an optimized deployment for the required analytical pipeline, using the available infrastructure resources (at least from the cloud and edge layers, optionally also from the fog layer). Multicriteria solver 503 operates in conjunction with: a module for cost fitness estimation 506 (which is a module that calculates the value of an objective cost function taking the extracted variables x = [x_{f1}, x_{f2}, .., x_{fM}] as input and making use of information provided for example on a usage/cost catalog or infrastructure price catalog 516, stored in a database stored in data storing means); a module for performance fitness estimation 507 (which is a module that estimates the value of a performance objective function based on previously collected performance statistics or runtime statistics 517 for different deployment configurations, stored in a database stored in data storing means); and a module for resilience fitness estimation 508 (which is a module that estimates the value of an objective resilience function, understood as the capacity to adapt to failure, for the infrastructure elements considered in different deployment configurations). Resilience of devices belonging to the cloud layer or to the fog layer is computed from available statistics (infrastructure resources reliability statistics) 518, stored in a database stored in data storing means, while resilience of devices belonging to the edge layer is computed by subsystem 9, which uses a predictive model. Subsystem 9 predicts probability of failure (failure probability prediction y) of the edge layer devices, where the hardware limitations of the devices can prevent the storage of a large number of statistics. A possible implementation of subsystem 9 is schematically shown in Figure 5. As the algorithm implemented at module 5, in particular at block 503, is being executed, and possible optimized solutions for the deployment of the analytical pipeline are being obtained, module 508 makes requests to subsystem 9. Each possible optimized solution usually involves the deploying of the analytical pipeline in one or more edge devices (computing devices located at the edge layer). In general, each solution involves a plurality of edge devices.

In a particular embodiment, for each possible solution, module 508 requests subsystem 9 (in particular, module 50 thereof) a failure prediction for the edge layer (represented as "y_{edge_layer}" in Figure 3), understood as the probability of failure of the edge layer taking into account the specific edge devices included in a proposed solution. Therefore, failure prediction "y_{edge_layer}" will be obtained by subsystem 9 taking into account the edge devices comprised in the proposed solution. This is done by obtaining failure predictions of individual edge devices and then calculating a failure prediction of the edge layer from the individual edge device failure predictions (for example, by applying mean values of the individual failure predictions, or by applying weighted mean values thereof, or by applying median value, or other statistics). Once subsystem 9 has calculated the edge layer failure prediction, it sends it ("y_{edge_layer}") to module 508. With this prediction "y_{edge_layer}", together with statistics 518 from the cloud layer (and from the fog layer, if there is one), module 508 estimates the value of an objective resilience function.

In another particular embodiment, for each possible deployment solution, module 508 requests subsystem 9 (in particular, module 50 thereof) an individual failure prediction for each edge device comprised in the proposed solution (in this case, "y_{device_j}" in Figure 3 represents a failure prediction for an individual edge device). Like in the previous embodiment, subsystem 9 then obtains a failure prediction of each individual edge device, but, unlike in the previous embodiment, subsystem 9 sends module 5 individual failure predictions ("y_{device_j}") for individual edge devices. Then, at module 5, a failure prediction of the edge layer from the individual edge device failure predictions is calculated (for example, by applying mean values of the individual failure predictions, or by applying weighted mean values thereof, or by applying median value, or other statistics). With this edge layer prediction, together with statistics 518 from the cloud layer (and from the fog layer, if there is one), module 508 estimates the value of an objective resilience function.

How to obtain the edge layer failure prediction is disclosed in detail later in this text.

Therefore, multicriteria solver 503 (also referred to as optimization solver) implements a multi-objective heuristic algorithm that jointly optimizes three conflicting objectives: cost, resilience and performance, towards the achievement of Pareto-optimal deployment configurations. In embodiments of the invention, in order to efficiently tackle the above multiobjective problem (that is to say, jointly optimizing the three objectives) the NSGA-II algorithm is preferably used. The NSGA-II algorithm is for example disclosed by Deb K. et al., in A fast and elitist multiobjective genetic algorithm: Nsga-ii. IEEE transactions on evolutionary computation 6(2), 182-197 (2002). By virtue of its selection strategy (based on non-dominance ranking and crowding distance), NSGA-II provides simple search mechanisms with good convergence and diversity properties. The solution provided by the multicriteria solver 503 comprises, for each phase of the analytical pipeline to be deployed, a set of devices (cloud, edge and optionally fog devices) that should be used in an optimal deployment of the analytical pipeline. This solution can be provided to a configuration file generator 513, which can generate a file 514 with the selected deployment (deployment configuration file).

In embodiments of the invention, the core of the optimizer (module 5) is a metaheuristic multi-objective optimization algorithm embedded in processing means of the computing device. This algorithm, using the values obtained for the different fitness, directs the search in the solution space until an optimal solution is found.

In embodiments of the invention, the multi-objective problem to be tackled can be described as the search for a set of solutions $\left\{{x}_{f 1}^{*},…,{x}_{fk}^{*}\right\}$, being f the number of phases and k the variables number, that balances optimally the Pareto between the minimization of f_{C}(x) and the maximization of f_{P}(x) and f_{R}(x), i.e.: $\left\{{x}_{f 1}^{*},…,{x}_{fk}^{*}\right\} = {arg}_{xf 1 , … , Xfk ∈ xfM} \left[max {f}_{R}\left(x\right),{minf}_{C}\left(x\right),{maxf}_{P}\left(x\right)\right] ,$

Where *f* ∈ {1, ... , *F*} with F denoting the number of phases of analytical pipeline and $x = {∪}_{m = 1}^{M} {X}_{fm}$ is the union of the alphabets X_{fm} characterizing every solution variables x_{fm}.,

In a possible embodiment, a uniform crossover with probability Pm and a random mutation operator with probability Pc are used to evolve the candidate solutions at each iteration ***i*** ∈ {**1**, ... , ***I***} with ***I*** denoting the maximum number of generations. After they are applied to a pool of candidate solutions (i.e. population), algorithm NSGA-II ranks such solution vectors depending on their dominance with respect to every fitness metric of the problem (that is to say, with respect to the cost, resilience and performance fitness metrics), and groups them in fronts or sets of non-dominated solutions. Candidates collected within the same dominance rank are preferably sorted in descending order of their crowding distance, which is proportional to the distance (within the multi-dimensional space spanned by the considered objectives) from every candidate to their neighboring solutions. The selection of the population for the next generation is based on an elite of for example 5% of the population size from the previous generation, while the remaining for example 95% is populated with the ranked individuals after the application of the aforementioned evolutionary operators (uniform crossover and random mutation operator).

An exemplary definition of the algorithm is described next, with non-limiting purposes:

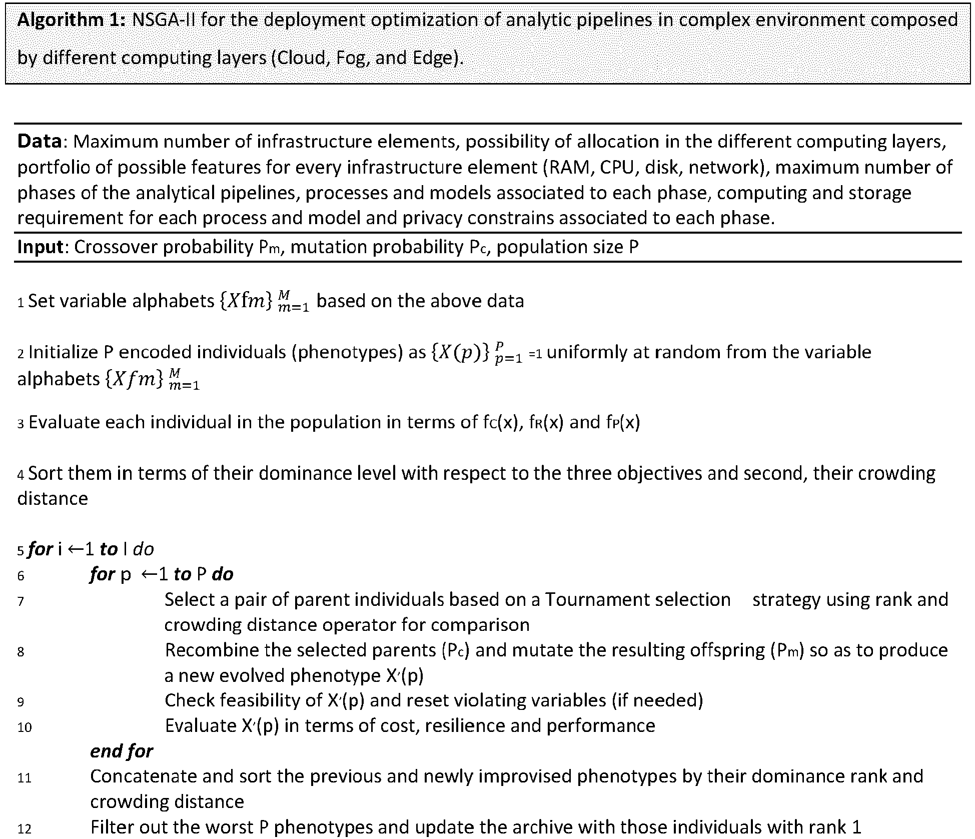

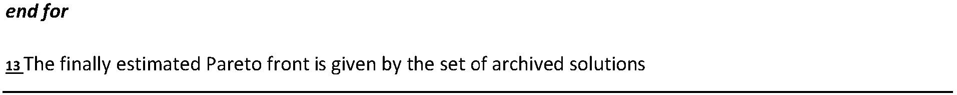

The cost 6 (block 506 in Figure 3) can for example be evaluated considering the overall economic cost of the infrastructure considered in the deployment (including for example purchase (market), operation and maintenance, personnel and/or energy consumption). For example, the overall cost of the deployment **f_{C}(x)** may result from the aggregation of all expenses related to the deployment of the pipeline, such as cost of acquisition of Cloud infrastructure and software licenses, and cost of supplying energy to all the elements of the infrastructure. The goal of the cost fitness is to minimize the total cost of the infrastructure per time unit (for example, per hour), this being the sum of the time unit costs of the set of infrastructure elements necessary for the analytical pipeline to be deployed successfully. To calculate the cost per time unit of each element, a formula composed of the linear combination of the following factors is preferably used: the type of resource (whether it is an on-premise element or an element in the cloud), whether it needs administration and maintenance personnel, and energy consumption.

The performance 7 (block 507 in Figure 3) can be evaluated considering the execution time of the pipeline in the considered infrastructure. For example, the performance of the deployment f_{P}(x) is computed following the equation: Performance = 1 / (Execution Time). Regarding the performance fitness, two performance parameters are preferably measured: execution time and makespan, which is the distance in time that elapses from the start of work to the end thereof. The performance fitness is based on existing statistics 517 and on an estimation function that uses these statistics 517 and variables or parameters of the definition of the pipeline 1 and variables or parameters of the definition of the infrastructure (cloud, fog and edge layers) 2. In embodiments of the invention, the performance estimation function factors the number of hops between infrastructure elements and the cost of transmitting the information between phases of the analytical pipeline.

The resilience 8 (block 508 in Figure 3) of the infrastructure elements can be evaluated from the perspective of ensuring fault tolerance, minimizing the infrastructure elements failure. In other words, the resilience fitness is based on the availability and fault tolerance of the involved elements of the infrastructure for a deployment solution. Resilience block 8, 508 therefore considers security risks and reliability statistics. To measure it, an estimation function based on statistics 518 (see Figure 3) for elements belonging to cloud, fog or on-premise computing layers, is used. This function calculates a value of resilience per possible element to be used in the deployment. For elements belonging to the edge layer, the edge failure prediction subsystem 9 is used. In other words, when an element is part of the cloud infrastructure layer, its resilience can be estimated from existing statistics 518 for providers. However, estimating the resilience value of different devices in the edge layer (edge nodes or edge devices), given their diversity in capacities and environmental conditions, is not feasible. In order to cope with this, a subsystem 9, capable of estimating a prediction of failure for each edge device in the edge layer, has been designed. In Figure 3, subsystem 9 is schematically represented with a module 50 for global model generation and a module 81ⱼ for local edge node model generation. Module 50 is embedded in a master device, such as a server (not shown). Module 81ⱼ is embedded in an edge node or device 80ⱼ (not shown). In general, subsystem 9 has a plurality of edge devices 80₁-80_{N}, of which at least one (preferably several ones) has a module 81ⱼ for generation of a local model. Each edge device 80ⱼ receives or is aware of statistics 91ⱼ representing the operation of the respective edge device. The overall resilience value of the deployment will be the combination of the computed values of resilience for the different infrastructure elements. For example, the resilience of the deployment **f_{R}(x)** is computed as the sum of the probability of failure of each element of the infrastructure, $Resilience = 1 / \left({\sum }_{1}^{e} Pfe\right)$). Pfe can be calculated using different methods depending on the computing layer in which the element is hosted. In the case of the cloud and fog layers, the average server downtime is preferably used. In the case of the edge layer, as these are typically lightweight devices, there are usually no available stored statistics (at module 5). Therefore, subsystem 9 is preferably used to make a prediction of the possibility of failure, as will be explained later.

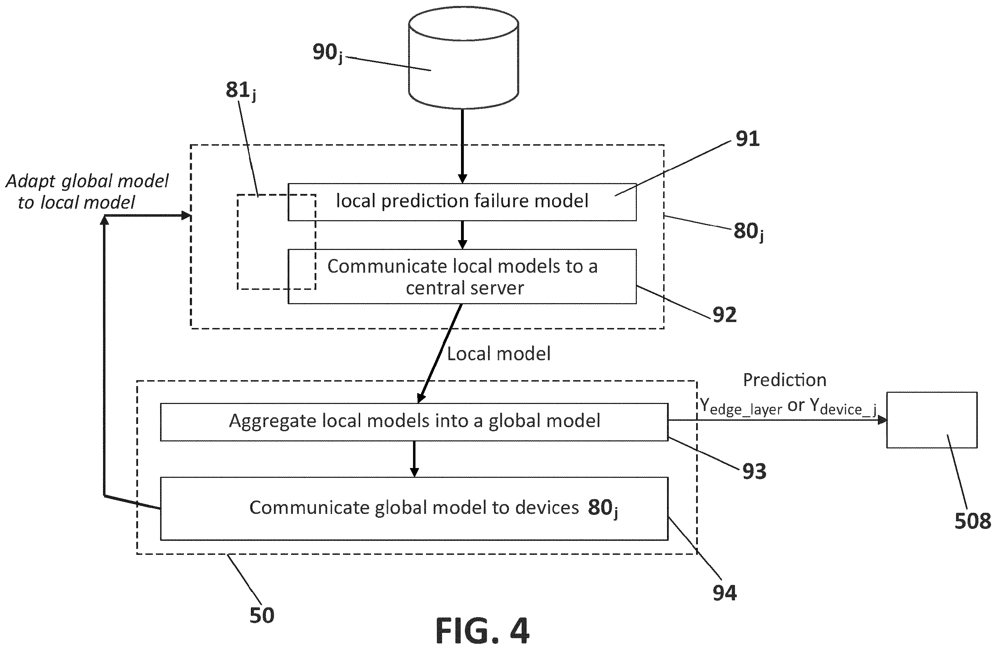

So, module 5 provides the solution to the proposed optimization problem: optimal deployment of an analytical pipeline in a complex environment composed of multiple layers of computing. Thus, cconsidering two inputs, the available infrastructure 2 and the description of the analytical pipeline 1, the optimizer implemented in module 5 extracts information from the inputs and, from the extracted information, it initializes the set of variables of the deployment solution X={ x_{f1}, x_{f2}, .., x_{fM} } that describe the space of possible solutions and provides the necessary data to calculate the objective or fitness functions, in this case cost f_{C}(X), performance f_{P}(X) and resilience f_{R}(X). In order to compute the resilience of the deployment **f_{R}(x),** in particular regarding elements belonging to the edge layer, subsystem 9 predicts the probability of failure of each of different devices at the edge layer of the infrastructure (individual probability of failure). And, in embodiments in which module 508 requests subsystem 9 a failure prediction for the edge layer (probability of failure of the edge layer taking into account the specific edge devices included in a proposed solution), subsystem 9 calculates a failure prediction of the edge layer from the individual edge device probabilities of failure and sends the failure prediction of the edge layer ("y_{edge_layer}" in Figures 3 and 4) to module 5. Alternatively, in embodiments in which module 508 requests subsystem 9 an individual failure prediction for each edge device comprised in the proposed solution, subsystem 9 sends the calculated individual edge device probabilities of failure ("y_{device_j}" in Figures 3 and 4) to module 5, in which a failure prediction of the edge layer is calculated. The devices available at the edge layer have been defined at the infrastructure definition 2. The probabilities of failure for each selected device of the edge layer obtained by subsystem 9 (also referred to as edge device failure prediction system) permit to decide which edge devices are optimal to ensure a resilient deployment. Therefore, subsystem 9 contributes to assess the resilience function 8 used by the optimization module 5. In embodiments of the invention, subsystem 9 is implemented by a federated machine learning algorithm. From results obtained by subsystem 9, the resilience function **f_{R}(x)** is evaluated at module 5.

Operation of subsystem 9 is disclosed with reference to Figures 4 and 5. In Figure 5, a possible architecture of subsystem 9 is shown. In Figure 4, the stages performed at subsystem 9 in order to predict the probability of failure of the edge devices, are shown. Subsystem 9 preferably implements a master-slave topology. A non-limiting implementation of the distributed architecture for data processing at the edge devices is schematically illustrated in Figure 5. As shown in Figure 5, subsystem 9 comprises a master device 150 (such as a server, for example a dedicated server) and a plurality of edge devices or nodes 80₁-80_{N} (also referred to as distributed devices or nodes). Each edge device 80₁-80_{N} communicates bidirectionally with the master device 150. The master device 150 has a module 50 for global model generation. At least one of the edge devices 80₁-80_{N} (preferably a plurality of them, and possibly all of them) has a module 81ⱼ in which a local model for the edge device is generated, using statistics representing the operation of the respective edge device. Thus, a local edge device failure prediction can be performed at each edge device 80₁-80_{N}. The master device 150 may be implemented in the same computing device or server as the one implementing optimization module 5, or in a different one.

Figure 4 shows a data flow of the stages performed at the edge device failure prediction subsystem 9 in order to make a prediction of the failure probability of infrastructure elements belonging the edge layer. The data flow of Figure 4 represents the steps performed at each edge device 80ⱼ, in particular at module 81ⱼ thereof, and at module 50 of the master device 150. Only one edge device 80ⱼ is shown in Figure 4. Subsystem 9 is aimed at predicting the possibility of failure of the edge devices 80ⱼ, 0 ≤ j ≤ N. The output of subsystem 9, which is either a failure prediction for the edge layer ( "y_{edge_layer}") or an individual failure prediction for each edge device comprised in a proposed solution ("y_{device_j}"), is an input to module 5, as shown in Figure 3, in particular to the module for resilience fitness estimation 508, in order to calculate the resilience function, because module 5 does usually not have historical failure statistics of devices located in the edge layer. Subsystem 9 uses a global failure detection model for all elements of the edge layer, to predict the probability of failure of each edge device at the edge layer (in particular, the probability of failure specific edge devices proposed in a possible deployment solution). Subsystem 9 must take into account the potentially high number of devices to be considered (available at the edge layer, and represented for example in Figure 5 as 80₁-80_{N}) and statistics 90ⱼ (information about their health, consumptions and heartbeats) of these devices, that can be collected from each edge device 80ⱼ to carry out the failure prediction. This large number of devices 80₁-80_{N} and the security-privacy restrictions of the statistics (schematically shown in Figures 3 and 4 as a memory means 90ⱼ from which statistics are input to a respective edge node 80ⱼ) to be collected by each one, pose the need to distribute the analytical processing (generation of the failure prediction model), mainly for two reasons: 1) collecting data in a single point in order to perform a centralized analysis would be expensive in terms of communication between a central node and the nodes at the edge(devices), and 2) it would also imply that the data would be shared and transmitted between devices, which could go against possible privacy restrictions. In order to tackle with these drawbacks, an approach based on Machine Learning Federation is preferably implemented. In other words, the prediction model implemented in subsystem 9 is trained in a distributed way (instead of in a centralized way). This way, data from the one or more edge devices 80₁-80_{N} does not have to travel to the master device (such as a server) 150. Instead, a local model -and not data, such as statistics 90ⱼ -, generated with these data within one or more edge devices or nodes 80₁-80_{N}, travels to a master device or central server 150.

Taking these two aspects into account, subsystem 9 preferably implements federated analytical techniques, in order to promote the distribution of the processing during analytical training and reduce the transmission of data and mitigate privacy and security problems. As shown in Figure 4, the global model generated or built at subsystem 9 is hosted in the module 50. The global model performs the probability of failure of each edge device at the edge layer taking into account local models trained at individual edge nodes. An edge device failure prediction local model (also referred to as local model) is generated in at least one of the devices belonging to the edge layer. In particular, local models are generated in respective modules 81ⱼ for local model generation embedded in respective edge devices 80ⱼ. In embodiments of the invention, all edge devices 80₁-80_{N} have a respective module for local model generation 81₁-81_{N}. In embodiments of the invention, only some of the edge devices 80₁-80_{N} have a module 81₁-81_{N}. This way, the processing required by subsystem 9 is shared in different devices 80₁-80_{N} of the edge layer. In embodiments of the invention, the technique called Federated Machine Learning (Yang Q. et al., Federated machine learning: Concept and applications. ACM Trans. Intell. Syst. Technol. 10(2) (Jan 2019)) is used. Federated machine learning is a method to train machine learning (ML) models securely via decentralization on the edge devices. In a possible embodiment, the model is a Neural Network and the data is usage statistics 90 collected by each device. An exemplary alternative model that may be used is Random Forest, following an approach of federation (Liu, Y., Liu, Y., Liu, Z., Liang, Y., Meng, C., Zhang, J., & Zheng, Y. (2020). Federated forest. IEEE Transactions on Big Data.)

As shown in the dataflow of Figure 4, which represents a possible embodiment of the process performed at an edge device 80ⱼ and master device or server 150, each edge device 80ⱼ in the edge layer collects, from an associated database 90ⱼ stored in memory means, metrics (statistics from the edge device itself) about its health (for example, CPU or device board, memory (RAM) and/or network consumptions and heartbeats emitted) and builds at the module for local model generation 81ⱼ, a local model, based on machine learning techniques, for the prediction of failure (stage 91). In embodiments of the invention, this is done by all edge devices comprised in a possible deployment solution, as requested by module 508 to subsystem 50. In other words, at stage 91 a local prediction failure model is built at a block or module 81ⱼ in one or more edge devices 80ⱼ. The local prediction failure model built at stage 91 is sent or communicated to the master device or server 150, in particular to its module 50 (stage 92). In fact, each local model built at respective blocks 81ⱼ in each edge device 80ⱼ is sent to module 50 in the master device or server 150. Module 50 aggregates the local models (of which there is at least one) sent by the different edge devices 80ⱼ into a single global model (stage 93), which is in turn communicated to the different edge devices 80ⱼ (stage 94) so that the global model continues to adapt and improve. Also, the global model generated at stage 93 is used at module 50 to calculate a failure prediction for each individual edge device 80ⱼ. Then, in embodiments in which module 508 has requested subsystem 9 individual failure predictions for each edge device comprised in the proposed solution, the individual failure predictions ("y_{device_j}") calculated at module 50 are sent to module 508. Alternatively, in embodiments in which module 508 has requested subsystem 9 a failure prediction for the edge layer, an edge layer failure prediction ("y_{edge_layer}") is calculated at module 50 from the failure predictions for each individual edge device and sent to module 508.

The system 10 for optimally deploying analytical pipelines is implemented in one or more computing means typically comprising data storage means and processing means. Computing means may be a server or computer or a collection of servers or computers. Module 5 and master device 50 may be implemented in a same computing means, such as a server, or in different ones. Computing means may be located either within or close to the industrial environment whose large amount of data needs to be managed (for example within a local network of the industrial environment), or remotely with respect to the industrial environment, for example in the cloud or in any other environment providing enough data storage and/or computation capacity. The data storing means comprised in the computing means may include at least a non-volatile memory, such as a hard disk drive (HDD) or a solid-state drive (SSD). Data is preferably organized in a data base. The processing means comprised in the computing means may include one or more processors. Non-limiting examples of processing means are a central processing unit or at least one core thereof, a graphics processing unit, a field-programmable integrated circuit such as an FPGA (i.e. field-programmable gate array) or an embedded circuit (e.g. a system-on-chip, a multiprocessor system-on-chip), and a combination thereof. The different algorithms used by the system 10 for optimally deploying analytical pipelines are stored in the data storing means and executed in the processing means. In other words, the method of the invention is applied and/or executed in the at least one processing means, in which different algorithms and computations are executed. Results of the computation performed at the processing means are stored in the data storing means. Final results (such as a file with an optimized deployment for an analytical pipeline) may be provided to a man-machine interface (MMI), such as a console or monitor, for easy interpretation and handling of results. Subsystem 9 may be partly implemented in the above described computing means and partly implemented in computing means comprised in at least one of the edge nodes belonging to the edge layer.

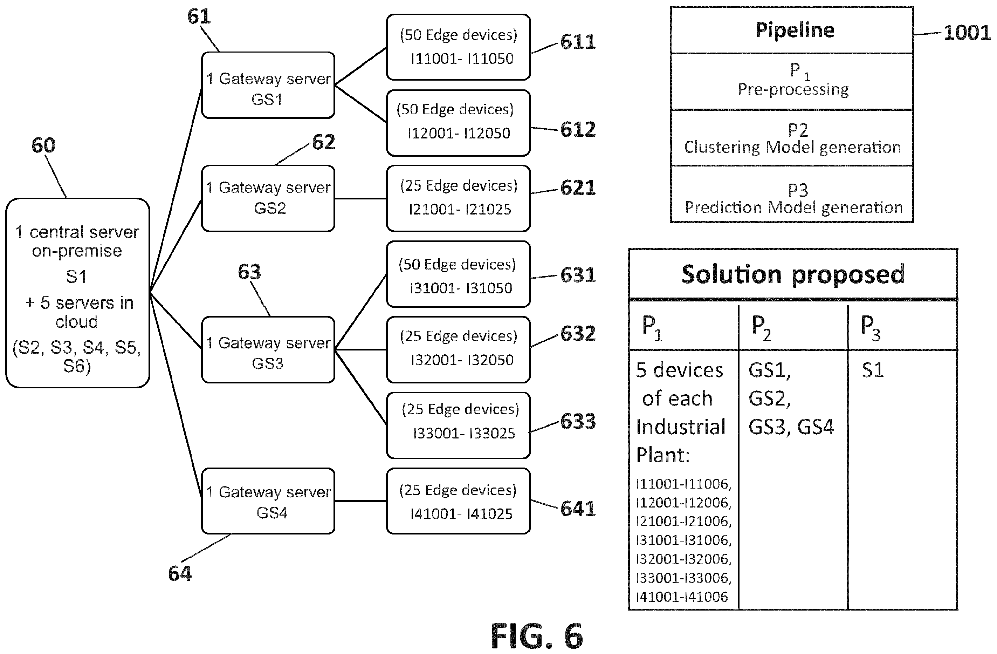

Next, an example of predictive maintenance use case in the field of Industry 4.0 is provided. The example is schematically represented in Figure 6. An organization 60 has different companies (4 companies in the example) 61-64 destined to manufacture automobile components. Each company 61-64 has different sensorized industrial plants 611-612, 621, 631-633, 641, as shown in Figure 6. Each industrial plant has different equipment, such as machine tools. The objective is to deploy an analytical pipeline that allows detecting a failure in an existing machine tool in any of the companies 61-64 and, of great importance, to ensure compliance with the supply chain. The problem is that the infrastructure elements and configurations where the analytical pipeline can be deployed form multiple possible combinations, making it practically impossible to ensure which one is the best.

In quantitative terms, the organization is made up of 4 companies 61-64, each one made up of a different number of industrial plants 611-612, 621, 631-633, 641. The infrastructure to be considered is associated with the different divisions, and in total has: 5 central on-premises servers (one server S1, associated to the general organization 60 and 4 servers, also referred to as gateway servers GS1-GS4, associated to companies 61-64, respectively), 5 servers provisioned in the cloud (servers S2-S6) and 250 edge devices deployed in the different industrial plants (for example, 50 edge devices in plant 611, 50 edge devices in plant 612, 25 edge devices in plant 621, 50 edge devices in plant 631, 25 edge device in plant 632, 25 edge devices in plant 633 and 25 edge devices in plant 641). A diagram of the organizations structure and the associated available infrastructure can be seen in Figure 6. The analytical pipeline 1001 to be considered (also shown in Figure 6) is made up of three phases and its general objective is to detect the failure of the machine tools in charge of making the automobile components. The first phase P₁ of the pipeline 1001 refers to the preprocessing of the variables acquired from the machines (for example, using sensors associated to the machines), eliminating the noise of the variables, and normalizing their values. The second phase P₂ of the pipeline 1001 refers to detecting outliers, which are samples that do not add value. Therefore, the second phase refers to a clustering model that segments between valid samples and samples not to be considered. The third phase P₃ of the pipeline 1001 refers to making a failure prediction from the selected samples.

Module 5, and in particular multicriteria solver 503, of the invention must find the deployment solution for these phases in the proposed infrastructure, following cost, performance and resilience criteria. The solution provided by the solver 503 is shown in Figure 6: the first phase P₁ of the pipeline 1001 should be deployed using 5 devices of each industrial plant 611-612, 621, 631-633, 641; the second phase P₂ of the pipeline 1001 should be deployed using four on-premise servers, in particular gateway servers GS1-GS4; and the third phase P₃ of the pipeline 1001 should be deployed using on-premise server S1.

As can be observed from the example, the proposed method favors the use of on-premise servers and edge devices, with respect to devices in the cloud, for at least two reasons: cost reduction (it is not necessary to pay for exploitation in a cloud provider) and performance improvement (because the on-premise servers are closer to the edge, the processing time is reduced thanks to shorter communication times).

## Claims

1. A computer-implemented method for optimizing the deployment of an analytical pipeline in an industrial production environment, comprising:
providing an analytical pipeline (1) to be deployed and a description of an available infrastructure (2) for the deployment of the analytical pipeline (1), wherein the analytical pipeline (1) comprises a plurality of analytical phases comprising analytical features, wherein the description of an available infrastructure (2) comprises a plurality of computing elements located in a cloud layer and a plurality of computing devices (80₁-80_{N}) located in an edge layer;
at an optimization module (5) implemented in a computing device:
from the analytical pipeline (1) and the available infrastructure (2), extracting a set of variables x = [x_{f1}, x_{f2}, .., x_{fM}], and providing the set of variables to a multicriteria solver (503);
at the multicriteria solver (503) executing a multi-objective heuristic algorithm configured to, using the provided set of input variables x = [x_{f1}, x_{f2}, .., x_{fM}], provide an optimal deployment for the analytical pipeline, wherein the multi-objective heuristic algorithm is configured to minimize the cost of the deployment by minimizing a cost fitness estimation function (506) and to maximize the performance and resilience of the deployment by maximizing a performance fitness estimation function (507) and a resilience fitness estimation function (508),
wherein the resilience fitness estimation function (508) is configured to compute the probability of failure of the computing elements of the available infrastructure (2), wherein the probability of failure of the computing elements belonging to the cloud layer is computed from available statistics and the probability of failure of the computing elements belonging to the edge layer is computed by a predictive model,
wherein the probability of failure of the devices (80₁-80_{N}) belonging to the edge layer is estimated in a federated way as follows:
at the optimization module (5), making a request for a prediction of failure of at least one edge device (80ⱼ) comprised in a possible deployment solution of the analytical pipeline (1);
at the at least one edge device (80ⱼ), building (91) a local failure prediction model using statistics (90ⱼ) representing the operation of the edge device (80ⱼ);
sending (92) the local failure prediction model built in the at least one edge device (80ⱼ) to a master device (150);
at the master device (150), aggregating (93) the at least one local model received from the at least one edge device (80ⱼ) in a global model;
calculating a prediction of failure of the at least one edge device (80ⱼ) by executing said global model;
deploying the optimized analytical pipeline at least in the cloud layer and in the edge layer.

2. The method of claim 1, wherein the set of variables x = [x_{f1}, x_{f2}, .., x_{fM}] comprises the following variables: a variable defining whether on-premise or cloud servers are used; a variable defining a selected infrastructure layer; a variable defining a technology to implement the algorithm; and at least one of the following variables: a variable defining an estimated Random-access memory required, a variable defining an estimated number of available CPU or cores required, and a variable defining an estimated storage capacity required.

3. The method of claim 2, wherein the set of variables x = [x_{f1}, x_{f2}, .., x_{fM}] further comprises at least one of the following variables: a variable defining a infrastructure fault tolerance level configured; a variable defining a security level provided by the infrastructure; and a variable defining a probability of failure of at least cloud and edge layer devices.

4. The method of any one of claims 1-3, wherein the definition of an available infrastructure (2) for the deployment of the analytical pipeline (1) also comprises a plurality of computing devices located in a fog layer.

5. The method of any one of claims 1-4, wherein the optimization module (5) makes one request of prediction of failure per each edge device (80ⱼ) comprised in a possible deployment solution, and:
the master device (150) calculates a prediction of failure of each edge device (80ⱼ) by executing said global model,
the master device (150) sends the optimization module (5) each prediction of failure (y_{device_j}), and
the optimization module (5) calculates a failure prediction of the edge layer from the individual edge device failure predictions (y_{device_j}).

6. The method of any one of claims 1-4, wherein the optimization module (5) makes a request of prediction of failure for the edge layer, and:
the master device (150) calculates a prediction of failure of each edge device (80ⱼ) by executing said global model,
the master device (150) calculates a failure prediction of the edge layer from the individual edge device failure predictions, and
the master device (150) sends the optimization module (5) the failure prediction of the edge layer (y_{edge_layer}).

7. **The** method of any one of claims 1-6, wherein the multi-objective heuristic algorithm is the NSGA-II algorithm.

8. A computing device implementing an optimization module (5) for optimizing the deployment of an analytical pipeline, the computing device being configured to:
from an analytical pipeline (1) comprising a plurality of analytical phases comprising analytical features, and a description of an available infrastructure (2) comprising a plurality of computing elements located in a cloud layer and a plurality of computing devices (80₁-80_{N}) located in an edge layer, extract a set of variables x = [x_{f1}, x_{f2}, .., x_{fM}];
at a multicriteria solver (503), execute a multi-objective heuristic algorithm for, from the provided set of input variables x = [x_{f1}, x_{f2}, .., x_{fM}] , providing an optimal deployment for the analytical pipeline, wherein the multi-objective heuristic algorithm is configured to minimize the cost of the deployment by minimizing a cost fitness estimation function (506) and to maximize the performance and resilience of the deployment by maximizing a performance fitness estimation function (507) and a resilience fitness estimation function (508),
wherein the resilience fitness estimation function (508) is configured to compute the probability of failure of the computing elements of the available infrastructure (2), wherein the probability of failure of the computing elements belonging to the cloud layer is computed from available statistics and the probability of failure of the computing elements belonging to the edge layer is computed by a predictive model,
wherein the probability of failure of the devices (80₁-80_{N}) belonging to the edge layer is estimated in a federated way as follows:
at the optimization module (5), making a request for a prediction of failure of at least one edge device (80ⱼ) comprised in a possible deployment solution of the analytical pipeline (1);
at the at least one edge device (80ⱼ), building (91) a local failure prediction model using statistics (90ⱼ) representing the operation of the edge device (80ⱼ);
sending (92) the local failure prediction model built in the at least one edge device (80ⱼ) to a master device (150);
at the master device (150), aggregating (93) the at least one local model received from the at least one edge device (80ⱼ) in a global model;
calculating a prediction of failure of the at least one edge device (80ⱼ) by executing said global model;
deploying the optimized analytical pipeline at least in the cloud layer and in the edge layer.

9. A system (10) comprising:
the computing device of claim 8; and
a subsystem (9) comprising a master device (150) and a plurality of edge devices (80₁-80_{N}), wherein the subsystem (9) is configured to build a global failure prediction model in a federated way, and to calculate a prediction of failure of at least one edge device by executing said global failure prediction model.

10. The system (10) of claim 9, wherein the at least one edge device (80ⱼ) is configured to build (91) a local failure prediction model using statistics (90ⱼ) of the edge device (80ⱼ) and to send it to the master device (150), the master device (150) being configured to aggregate (93) the at least one local model received from the at least one edge device (80ⱼ) in the global failure prediction model.

11. A computer program product comprising computer program instructions/code or a computer-readable memory/medium that stores program instructions/code for performing the method according to any one of claims 1-7.

## Patentansprüche

1. Computerimplementiertes Verfahren zum Optimieren des Einsatzes einer Analysepipeline in einer industriellen Produktionsumgebung, umfassend:
Bereitstellen einer einzusetzenden Analysepipeline (1) und einer Beschreibung einer verfügbaren Infrastruktur (2) für das Einsetzen der Analysepipeline (1), wobei die Analysepipeline (1) eine Vielzahl von Analysephasen umfasst, die Analysemerkmale umfassen, und wobei die Beschreibung einer verfügbaren Infrastruktur (2) eine Vielzahl von Rechenelementen, die sich in einem Cloud-Layer befinden, sowie eine Vielzahl von Rechenvorrichtungen (80₁-80_{N}) umfasst, die sich in einem Edge-Layer befinden;
an einem in einer Rechenvorrichtung implementierten Optimierungsmodul (5):
aus der Analysepipeline (1) und der verfügbaren Infrastruktur (2), Extrahieren eines Satzes von Variablen x = [x_{f1}, x_{f2}, .., x_{fM}] und Bereitstellen des Satzes von Variablen an einen Mehrkriterien-Solver (503);
an dem Mehrkriterien-Solver (503), Ausführen eines heuristischen Mehrzielalgorithmus, der dazu eingerichtet ist, unter Verwendung des bereitgestellten Satzes von Eingangsvariablen x = [x_{f1}, x_{f2}, .., x_{fM}], einen optimalen Einsatz für die Analysepipeline bereitzustellen, wobei der heuristische Mehrzielalgorithmus dazu eingerichtet ist, die Kosten des Einsatzes durch Minimieren einer Kosten-Fitness-Schätzfunktion (506) zu minimieren und die Leistungsfähigkeit sowie Resilienz des Einsatzes durch Maximieren einer Leistungs-Fitness-Schätzfunktion (507) und einer Resilienz-Fitness-Schätzfunktion (508) zu maximieren,
wobei die Resilienz-Fitness-Schätzfunktion (508) dazu eingerichtet ist, die Ausfallwahrscheinlichkeit der Rechenelemente der verfügbaren Infrastruktur (2) zu berechnen, wobei die Ausfallwahrscheinlichkeit der zum Cloud-Layer gehörenden Rechenelemente aus verfügbaren Statistiken berechnet wird und die Ausfallwahrscheinlichkeit der zum Edge-Layer gehörenden Rechenelemente mittels eines Vorhersagemodells berechnet wird,
wobei die Ausfallwahrscheinlichkeit der zum Edge-Layer gehörenden Vorrichtungen (80₁-80_{N}) auf föderierte Weise wie folgt geschätzt wird:
an dem Optimierungsmodul (5), Anfordern einer Ausfallvorhersage für mindestens eine Edge-Vorrichtung (80ⱼ), die in einer möglichen Einsatzlösung der Analysepipeline (1) enthalten ist;
an der mindestens einen Edge-Vorrichtung (80j), Erstellen (91) eines lokalen Ausfallvorhersagemodells unter Verwendung von Statistiken (90j), die den Betrieb der Edge-Vorrichtung (80ⱼ) repräsentieren;
Senden (92) des in der mindestens einer Edge-Vorrichtung (80ⱼ) erstellten lokalen Ausfallvorhersagemodells an eine Master-Vorrichtung (150);
an der Master-Vorrichtung (150), Aggregieren (93) des mindestens einen von der mindestens einen Edge-Vorrichtung (80j) empfangenen lokalen Modells zu einem globalen Modell;
Berechnen einer Ausfallvorhersage für die mindestens eine Edge-Vorrichtung (80ⱼ) durch Ausführen des globalen Modells;
Einsetzen der optimierten Analysepipeline zumindest in dem Cloud-Layer und in dem Edge-Layer.

2. Verfahren nach Anspruch 1, wobei der Satz von Variablen x = [x_{f1}, x_{f2}, .., x_{fM}] die folgenden Variablen umfasst: eine Variable, die definiert, ob lokale Server oder Cloud-Server verwendet werden; eine Variable, die einen ausgewählten Infrastruktur-Layer definiert; eine Variable, die eine Technologie zur Implementierung des Algorithmus definiert; und mindestens eine der folgenden Variablen: eine Variable, die einen geschätzten erforderlichen Arbeitsspeicher definiert, eine Variable, die eine geschätzte erforderliche Anzahl verfügbarer CPUs oder Kerne definiert, und eine Variable, die eine geschätzte erforderliche Speicherkapazität definiert.

3. Verfahren nach Anspruch 2, wobei der Satz von Variablen x = [x_{f1}, x_{f2}, .., x_{fM}] ferner mindestens eine der folgenden Variablen umfasst: eine Variable, die ein konfiguriertes Fehlertoleranzniveau der Infrastruktur definiert; eine Variable, die ein von der Infrastruktur bereitgestelltes Sicherheitsniveau definiert; und eine Variable, die eine Ausfallwahrscheinlichkeit zumindest von Vorrichtungen des Cloud-Layers und des Edge-Layers definiert.

4. Verfahren nach einem der Ansprüche 1 bis 3, wobei die Definition einer verfügbaren Infrastruktur (2) für den Einsatz der Analysepipeline (1) ferner eine Vielzahl von Rechenvorrichtungen umfasst, die sich in einem Fog-Layer befinden.

5. Verfahren nach einem der Ansprüche 1 bis 4, wobei das Optimierungsmodul (5) für jede in einer möglichen Einsatzlösung enthaltene Edge-Vorrichtung (80ⱼ) eine Ausfallvorhersage anfordert, und wobei:
die Master-Vorrichtung (150) durch Ausführen des globalen Modells eine Ausfallvorhersage für jede Edge-Vorrichtung (80ⱼ) berechnet,
die Master Vorrichtung (150) jede Ausfallvorhersage (y_{device_i}) an das Optimierungsmodul (5) sendet, und
das Optimierungsmodul (5) aus den individuellen Ausfallvorhersagen der Edge-Vorrichtung (y_{device_i}) eine Ausfallvorhersage für den Edge-Layer berechnet.

6. Verfahren nach einem der Ansprüche 1 bis 4, wobei das Optimierungsmodul (5) eine Ausfallvorhersage für den Edge-Layer anfordert, und wobei:
die Master-Vorrichtung (150) durch Ausführen des globalen Modells eine Ausfallvorhersage für jede Edge-Vorrichtung (80ⱼ) berechnet,
die Master-Vorrichtung (150) aus den individuellen Ausfallvorhersagen der Edge-Vorrichtungen eine Ausfallvorhersage für den Edge-Layer berechnet, und
die Master Vorrichtung (150) die Ausfallvorhersage für den Edge-Layer (y_{edge_layer}) an das Optimierungsmodul (5) sendet.

7. Verfahren nach einem der Ansprüche 1 bis 6, wobei der heuristische Mehrzielalgorithmus der NSGA-II-Algorithmus ist.

8. Rechenvorrichtung, die ein Optimierungsmodul (5) zum Optimieren des Einsatzes einer Analysepipeline implementiert, wobei die Rechenvorrichtung dazu eingerichtet ist:
aus einer Analysepipeline (1), die eine Vielzahl von Analysephasen mit Analysemerkmalen umfasst, und einer Beschreibung einer verfügbaren Infrastruktur (2), die eine Vielzahl von in einem Cloud-Layer befindlichen Rechenelementen und eine Vielzahl von in einem Edge-Layer befindlichen Rechenvorrichtungen (80₁-80_{N}) umfasst, einen Satz von Variablen x = [x_{f1}, x_{f2}, .., x_{fM}] zu extrahieren;
an einem Mehrkriterien-Solver (503) einen heuristischen Mehrzielalgorithmus auszuführen, um aus dem bereitgestellten Satzes von Eingangsvariablen x = [x_{f1}, x_{f2}, .., x_{fM}] einen optimalen Einsatz für die Analysepipeline bereitzustellen, wobei der heuristische Mehrzielalgorithmus dazu eingerichtet ist, die Kosten des Einsatzes durch Minimieren einer Kosten-Fitness-Schätzfunktion (506) zu minimieren und die Leistungsfähigkeit sowie die Resilienz des Eisatzes durch Maximieren einer Leistungs-Fitness-Schätzfunktion (507) und einer Resilienz-Fitness-Schätzfunktion (508) zu maximieren,
wobei die Resilienz-Fitness-Schätzfunktion (508) dazu eingerichtet ist, die Ausfallwahrscheinlichkeit der Rechenelemente der verfügbaren Infrastruktur (2) zu berechnen, wobei die Ausfallwahrscheinlichkeit der zum Cloud-Layer gehörenden Rechenelemente aus verfügbaren Statistiken berechnet wird und die Ausfallwahrscheinlichkeit der zum Edge-Layer gehörenden Rechenelemente mittels eines Vorhersagemodells berechnet wird,
wobei die Ausfallwahrscheinlichkeit der zum Edge-Layer gehörenden Vorrichtungen (80₁-80_{N}) auf föderierte Weise wie folgt geschätzt wird:
an dem Optimierungsmodul (5), Anfordern einer Ausfallvorhersage für mindestens eine Edge-Vorrichtung (80ⱼ), die in einer möglichen Einsatzlösung der Analysepipeline (1) enthalten ist;
an der mindestens einen Edge-Vorrichtung (80j), Erstellen (91) eines lokalen Ausfallvorhersagemodells unter Verwendung von Statistiken (90j), die den Betrieb der Edge-Vorrichtung (80ⱼ) repräsentieren;
Senden (92) des in der mindestens einer Edge-Vorrichtung (80ⱼ) erstellten lokalen Ausfallvorhersagemodells an eine Master-Vorrichtung (150);
an der Master-Vorrichtung (150), Aggregieren (93) des mindestens einen von der mindestens einen Edge-Vorrichtung (80j) empfangenen lokalen Modells zu einem globalen Modell;
Berechnen einer Ausfallvorhersage für die mindestens eine Edge-Vorrichtung (80ⱼ) durch Ausführen des globalen Modells;
Einsetzen der optimierten Analysepipeline zumindest in dem Cloud-Layer und in dem Edge-Layer.

9. System (10), umfassend:
die Rechenvorrichtung nach Anspruch 8; und
ein Subsystem (9), das eine Master-Vorrichtung (150) und eine Vielzahl von Edge-Vorrichtungen (80₁-80_{N}) umfasst, wobei das Subsystem (9) dazu eingerichtet ist, auf föderierte Weise ein globales Ausfallvorhersagemodell zu erstellen und durch Ausführung des globalen Ausfallvorhersagemodells eine Ausfallvorhersage für mindestens eine Edge-Vorrichtung zu berechnen.

10. System (10) nach Anspruch 9, wobei die mindestens eine Edge-Vorrichtung (80ⱼ) dazu eingerichtet ist, unter Verwendung von Statistiken (90ⱼ) der Edge-Vorrichtung (80ⱼ) ein lokales Ausfallvorhersagemodell zu erstellen (91) und dieses an die Master-Vorrichtung (150) zu senden, wobei die Master-Vorrichtung (150) dazu eingerichtet ist, das mindestens eine von der mindestens einen Edge-Vorrichtung (80ⱼ) empfangene lokale Modell zu dem globalen Ausfallvorhersagemodell zu aggregieren (93).

11. Computerprogrammprodukt, das Computerprogrammbefehle/-code oder einen computerlesbaren Speicher/ein computerlesbares Medium umfasst, auf dem Programmbefehle/-code zur Durchführung des Verfahrens gemäß einem der Ansprüche 1 bis 7 gespeichert sind.

## Revendications

1. Procédé mis en œuvre par ordinateur pour optimiser le déploiement d'un pipeline analytique dans un environnement de production industrielle, comprenant :
la fourniture d'un pipeline analytique (1) à déployer et d'une description d'une infrastructure disponible (2) pour le déploiement du pipeline analytique (1), où le pipeline analytique (1) comprend une pluralité de phases analytiques comprenant des caractéristiques analytiques, dans lequel la description d'une infrastructure disponible (2) comprend une pluralité d'éléments informatiques situés dans une couche en nuage et une pluralité de dispositifs informatiques (80₁-80_{N}) situés dans une couche périphérique ;
au niveau d'un module d'optimisation (5) mis en œuvre dans un dispositif informatique :
à partir du pipeline analytique (1) et de l'infrastructure disponible (2), l'extraction d'un ensemble de variables x = [x_{f1}, x_{f2}, ..., x_{fM}], et la fourniture de l'ensemble de variables à un solveur multicritère (503) ;
au niveau du solveur multicritère (503), l'exécution d'un algorithme heuristique multi-objectif configuré pour, en utilisant l'ensemble fourni de variables d'entrée x = [x_{f1}, x_{f2}, ..., x_{fM}], fournir un déploiement optimal pour le pipeline analytique, où l'algorithme heuristique multi-objectif est configuré pour minimiser le coût du déploiement en minimisant une fonction d'estimation d'adéquation en termes de coût (506) et pour maximiser les performances et la résilience du déploiement en maximisant une fonction d'estimation d'adéquation en termes de performances (507) et une fonction d'estimation d'adéquation en termes de résilience (508),
dans lequel la fonction d'estimation d'adéquation en termes de résilience (508) est configurée pour calculer la probabilité de défaillance des éléments informatiques de l'infrastructure disponible (2), où la probabilité de défaillance des éléments informatiques appartenant à la couche en nuage est calculée à partir de statistiques disponibles et la probabilité de défaillance des éléments informatiques appartenant à la couche périphérique est calculée par un modèle prédictif,
dans lequel la probabilité de défaillance des dispositifs (80₁-80_{N}) appartenant à la couche périphérique est estimée de manière fédérée comme suit :
au niveau du module d'optimisation (5), l'émission d'une requête pour une prédiction de défaillance d'au moins un dispositif périphérique (80ⱼ) compris dans une solution de déploiement possible du pipeline analytique (1) ;
au niveau de l'au moins un dispositif périphérique (80ⱼ), la construction (91) d'un modèle local de prédiction de défaillance en utilisant des statistiques (90ⱼ) représentant le fonctionnement du dispositif périphérique (80ⱼ) ;
l'envoi (92) du modèle local de prédiction de défaillance construit dans l'au moins un dispositif périphérique (80ⱼ) à un dispositif maître (150) ;
au niveau du dispositif maître (150), l'agrégation (93) de l'au moins un modèle local reçu de l'au moins un dispositif périphérique (80ⱼ) dans un modèle global ;
le calcul d'une prédiction de défaillance de l'au moins un dispositif périphérique (80ⱼ) en exécutant ledit modèle global ;
le déploiement du pipeline analytique optimisé au moins dans la couche en nuage et dans la couche périphérique.

2. Procédé selon la revendication 1, dans lequel l'ensemble de variables x = [x_{f1}, x_{f2}, ..., x_{fM}] comprend les variables suivantes : une variable définissant si des serveurs sur site ou en nuage sont utilisés ; une variable définissant une couche d'infrastructure sélectionnée ; une variable définissant une technologie pour mettre en œuvre l'algorithme ; et au moins l'une des variables suivantes : une variable définissant une mémoire vive estimée requise, une variable définissant un nombre estimé de CPU ou de cœurs disponibles requis, et une variable définissant une capacité de stockage estimée requise.

3. Procédé selon la revendication 2, dans lequel l'ensemble de variables x = [x_{f1}, x_{f2}, ..., x_{fM}] comprend en outre au moins l'une des variables suivantes : une variable définissant un niveau de tolérance aux pannes de l'infrastructure configuré ; une variable définissant un niveau de sécurité fourni par l'infrastructure ; et une variable définissant une probabilité de défaillance d'au moins les dispositifs de couches en nuage et périphérique.

4. Procédé selon l'une quelconque des revendications 1 à 3, dans lequel la définition d'une infrastructure disponible (2) pour le déploiement du pipeline analytique (1) comprend également une pluralité de dispositifs informatiques situés dans une couche de brouillard.

5. Procédé selon l'une quelconque des revendications 1 à 4, dans lequel le module d'optimisation (5) émet une requête de prédiction de défaillance pour chaque dispositif périphérique (80ⱼ) compris dans une solution de déploiement possible, et :
le dispositif maître (150) calcule une prédiction de défaillance de chaque dispositif périphérique (80ⱼ) en exécutant ledit modèle global,
le dispositif maître (150) envoie au module d'optimisation (5) chaque prédiction de défaillance (y_{device_j}), et
le module d'optimisation (5) calcule une prédiction de défaillance de la couche périphérique à partir des prédictions de défaillance individuelles de dispositifs périphériques (y_{device_j}).

6. Procédé selon l'une quelconque des revendications 1 à 4, dans lequel le module d'optimisation (5) émet une requête de prédiction de défaillance pour la couche périphérique, et :
le dispositif maître (150) calcule une prédiction de défaillance de chaque dispositif périphérique (80ⱼ) en exécutant ledit modèle global,
le dispositif maître (150) calcule une prédiction de défaillance de la couche périphérique à partir des prédictions de défaillance individuelles de dispositifs périphériques, et
le dispositif maître (150) envoie au module d'optimisation (5) la prédiction de défaillance de la couche périphérique (y_{edge_layer}).

7. Procédé selon l'une quelconque des revendications 1 à 6, dans lequel l'algorithme heuristique multi-objectif est l'algorithme NSGA-II.

8. Dispositif informatique mettant en œuvre un module d'optimisation (5) pour optimiser le déploiement d'un pipeline analytique, le dispositif informatique étant configuré pour :
à partir d'un pipeline analytique (1) comprenant une pluralité de phases analytiques comprenant des caractéristiques analytiques, et d'une description d'une infrastructure disponible (2) comprenant une pluralité d'éléments informatiques situés dans une couche en nuage et une pluralité de dispositifs informatiques (80₁-80_{N}) situés dans une couche périphérique, extraire un ensemble de variables x = [x_{f1}, x_{f2}, ..., x_{fM}] ;
au niveau d'un solveur multicritère (503), exécuter un algorithme heuristique multi-objectif pour, à partir de l'ensemble fourni de variables d'entrée x = [x_{f1}, x_{f2}, ..., x_{fM}], fournir un déploiement optimal pour le pipeline analytique, où l'algorithme heuristique multi-objectif est configuré pour minimiser le coût du déploiement en minimisant une fonction d'estimation d'adéquation en termes de coût (506) et pour maximiser les performances et la résilience du déploiement en maximisant une fonction d'estimation d'adéquation en termes de performances (507) et une fonction d'estimation d'adéquation en termes de résilience (508),
dans lequel la fonction d'estimation d'adéquation en termes de résilience (508) est configurée pour calculer la probabilité de défaillance des éléments informatiques de l'infrastructure disponible (2), où la probabilité de défaillance des éléments informatiques appartenant à la couche en nuage est calculée à partir de statistiques disponibles et la probabilité de défaillance des éléments informatiques appartenant à la couche périphérique est calculée par un modèle prédictif,
dans lequel la probabilité de défaillance des dispositifs (80₁-80_{N}) appartenant à la couche périphérique est estimée de manière fédérée comme suit :
au niveau du module d'optimisation (5), l'émission d'une requête pour une prédiction de défaillance d'au moins un dispositif périphérique (80ⱼ) compris dans une solution de déploiement possible du pipeline analytique (1) ;
au niveau de l'au moins un dispositif périphérique (80ⱼ), la construction (91) d'un modèle local de prédiction de défaillance en utilisant des statistiques (90ⱼ) représentant le fonctionnement du dispositif périphérique (80ⱼ) ;
l'envoi (92) du modèle local de prédiction de défaillance construit dans l'au moins un dispositif périphérique (80ⱼ) à un dispositif maître (150) ;
au niveau du dispositif maître (150), l'agrégation (93) de l'au moins un modèle local reçu de l'au moins un dispositif périphérique (80ⱼ) dans un modèle global ;
le calcul d'une prédiction de défaillance de l'au moins un dispositif périphérique (80j) en exécutant ledit modèle global ;
le déploiement du pipeline analytique optimisé au moins dans la couche en nuage et dans la couche périphérique.

9. Système (10) comprenant :
le dispositif informatique selon la revendication 8 ; et
un sous-système (9) comprenant un dispositif maître (150) et une pluralité de dispositifs périphériques (80₁-80_{N}), où le sous-système (9) est configuré pour construire un modèle global de prédiction de défaillance de manière fédérée, et pour calculer une prédiction de défaillance d'au moins un dispositif périphérique en exécutant ledit modèle global de prédiction de défaillance.

10. Système (10) selon la revendication 9, dans lequel l'au moins un dispositif périphérique (80ⱼ) est configuré pour construire (91) un modèle local de prédiction de défaillance en utilisant des statistiques (90ⱼ) du dispositif périphérique (80ⱼ) et pour l'envoyer au dispositif maître (150), le dispositif maître (150) étant configuré pour agréger (93) l'au moins un modèle local reçu de l'au moins un dispositif périphérique (80ⱼ) dans le modèle global de prédiction de défaillance.

11. Produit de programme informatique comprenant des instructions/un code de programme informatique ou une mémoire/un support lisible par ordinateur qui stocke des instructions/un code de programme pour réaliser le procédé selon l'une quelconque des revendications 1 à 7.
